# EUROPÄISCHE PATENTSCHRIFT

(11) **EP 0 601 141 B1**
(45) Veröffentlichungstag und Bekanntmachung des Hinweises auf die Patenterteilung: **23.12.1998**
(21) Anmeldenummer: 93909370.4
(22) Anmeldetag: 16.04.1993
(51) Int. Cl.: B42F 13/40

(54) **VORRICHTUNG ZUM HALTEN VON ABLAGEORDNERN**
FILE-HOLDER
DISPOSITIF POUR MAINTENIR DES CLASSEURS

(30) Priorität: 16.04.1992 DE 9205324 U
(43) Veröffentlichungstag der Anmeldung: 15.06.1994
(73) Patentinhaber: DOERNER, Ulf, D-80804 München (DE)
(72) Erfinder: DOERNER, Ulf, D-80804 München (DE)
(74) Vertreter: Lewald, Dietrich, Dipl.-Ing.
(86) Internationale Anmeldenummer: EP9300934
(87) Internationale Veröffentlichungsnummer: WO9321026

(56) Entgegenhaltungen:
- EP-A- 0 437 652
- DE-U- 8 404 691
- DE-U- 9 001 411
- US-A- 1 811 124
- US-A- 1 827 592
- US-A- 3 381 928
- US-A- 3 638 967
- US-A- 4 433 929
- US-A- 5 035 393

## Beschreibung

Die Erfindung betrifft eine Vorrichtung zum Halten von Ablageordnern, insbesondere Präsentationsordnern in Präsentationsstellung.

Millionenfach werden Ablageordner der verschiedensten Hersteller jedes Jahr verkauft, von denen ein großer Teil als sog. Präsentationsordner bei Schulungen, als Service-Ordner oder dergleichen, eingesetzt werden. Die Präsentationsordner für Schulungen werden auch Flipchart-Ordner genannt. Die Ordner bestehen aus zwei steifen Deckseiten bzw. Grundplatten und einem sie verbindenden Rücken und haben im allgemeinen auf der einen Innenseite zwei oder vier stehende Bügel, die sich öffnen und schließen lassen und in die die einzelnen Präsentationsblätter, Folien, aber auch Gebilde aus steifem Karton oder Kunststoff sich einhängen lassen. Diese Bügel werden auch Ringmechanik genannt. Die Festlegung des Ordnerinhalts erfolgt bei solchen Ablageordnern gewöhnlich über sog. Tipklemmer, bestehend aus Wippe, Federn und Tipklemmschiene. Durch Halteösen auf der Grundplatte werden die Bügel gewöhnlich nach dem Schließen des Ordners festgelegt (rasten ein).

Um einen solchen Ordner in aufgeschlagener Weise beispielsweise zur Demonstration seines Inhalts aufstellen zu können, sind schon die kompliziertesten Konstruktionen bekannt, beispielsweise ein teilweises Abklappen eines Teils des einen Deckkartons (Grundplatte).

Eine solche Konstruktion ist bekannt durch das deutsche Gebrauchsmuster G 90 01 411.1. Dort ist eine große Grundplatte mit parallel zur Längsrichtung der Grundplatte verlaufenden nach innen gebogenen Schenkeln erheblicher Ausmaße vorgesehen.

Der Erfindung liegt die Aufgabe zugrunde, eine Halteschiene für Präsentationsordner so weiterzubilden, daß die Präsentation mit wesentlich einfacheren Mitteln als bisher erreicht werden kann.

Dies wird überraschend einfach dadurch erreicht, daß bei einer Vorrichtung zum Halten von Ablageordnern, insbesondere Präsentationsordnern, in Präsentationsstellung eine flache Halteschiene mit nach oben gebogenen oder gefalzten Schenkeln an jedem Ende vorgesehen ist.

Durch diese überaus einfache Konstruktion ist es möglich, den Ordner beispielsweise um 240° zu öffnen und einfach auf die Schiene zu stellen. Die beiden Deckklappenteile des Ordners werden gegen ein Öffnen des Ordners in den flachen Zustand durch die beiden Schenkel gehalten.

In Weiterbildung der Erfindung ist es möglich, etwas unter geringerem Abstand zwei zusätzliche hochstehende Elemente auf der Schiene vorzusehen, so daß der Ordner in einer anderen Stellung stabil stehen kann.

Als Material für die Halteschiene kann jedes stabile Material wie Stahl, Nicht-Eisenmetalle, Holz, Kunststoff, aber auch beispielsweise eine Halteschiene aus Recyclingpapier mit aufgeklebten Recyclingpapierwürfeln an den Enden Verwendung finden.

Die Schiene trägt Lochungen, vorzugsweise vier Lochungen, (verschiedene Ablegeraster) und kann dann genauso wie die Charts in die Haltebügel eingefügt werden.

Die Halteschiene kann längsverlaufende Sicken zur Stabilisierung aufweisen.

In Weiterbildung der Erfindung ist es möglich, die Halteschiene mit dem Tipklemmer des Ablageordners als ein einziges Stück integriert auszubilden, wobei dann die Schenkel entsprechend weiter hochgebogen werden.

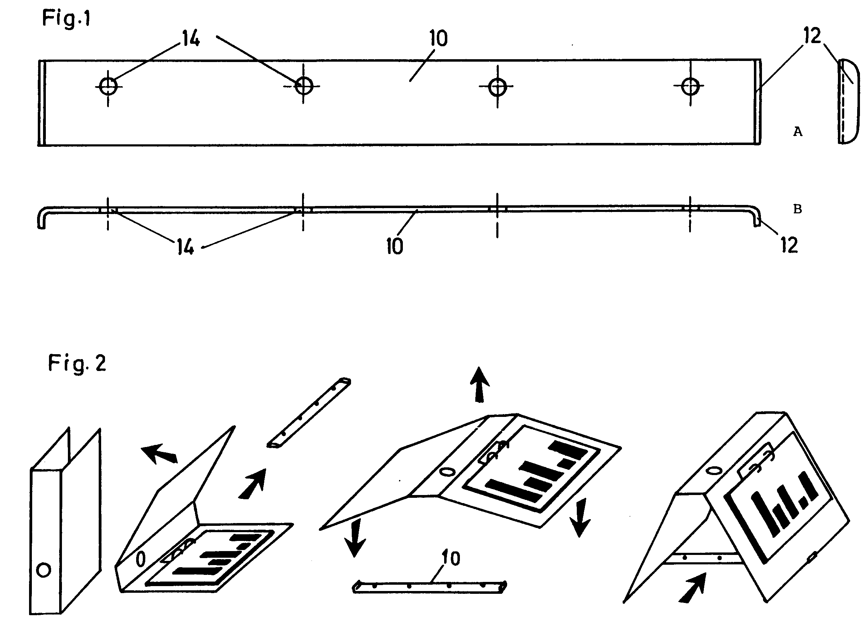

Eine beispielsweise Ausführungsform der Erfindung soll nun mit bezug auf die beiliegende Zeichnung näher erläutert werden. Diese zeigt in
- Fig. 1A: die Halteschiene in der Draufsicht und der zugeordneten Stirndraufsicht,
- Fig. 1B: in der Ansicht,
- Fig. 2: verdeutlicht den Einsatz der Halteschiene, wobei gezeigt ist, wie der Ablageordner in seine stabile Halte- oder Präsentationsstellung aufgrund der Halteschiene 10 gebracht wird.

Die beispielsweise aus feuerverzinktem St 37 bestehende Schiene 10 trägt in Anpassung an verschiedene Bügel Teilungen zum Beispiel zwei Sätze von Löchern 14. An den Enden ist die Schiene, wie bei 12 gezeigt, um ein kleines Stück hochgebogen und bildet damit endseitige Schenkel.

Beispielsweise kann man die Schiene aus feuerverzinktem St 37 herstellen, indem man alle 30 cm Metallstreifen abschneidet, entgratet und dann die Löcher stanzt und die Enden aufbiegt. Es kann um 90°, es kann aber auch um einen Winkel zwischen 60 und 90° mit der Schiene aufgebogen werden. Die Höhe der aufgebogenen Schenkel kann 1 bis 10 mm ausmachen.

Die Schiene kann gestanzt sein.

## Patentansprüche

1. Vorrichtung zum Halten von Ablageordnern, insbesondere Präsentationsordnern, in Präsentationsstellung mit einem Grundkörper und hochgebogenen Halteschenkeln, dadurch gekennzeichnet, daß dieser Grundkörper aus einer flachen Halteschiene (10), deren Enden nach oben gebogene oder gefalzte Schenkel (12) tragen besteht.

2. Vorrichtung nach Anspruch 1, wobei die Halteschiene als Klemmschließe eines Ablageordners ausgebildet ist.

3. Vorrichtung nach Anspruch 1, gekennzeichnet durch Lochungen der Halteschiene zu deren Abheften in Ordnern verschiedenster Befestigungslochteilungen.

4. Vorrichtung nach einem der vorhergehenden Ansprüche, dadurch gekennzeichnet, daß zusätzliche hochstehende Elementenpaare parallel zu und mit Abstand nach innen zu den Schenkeln (12) vorgesehen sind.

5. Vorrichtung nach einem der vorhergehenden Ansprüche, dadurch gekennzeichnet, daß die Halteschiene aus feuerverzinktem St 37 Stahl besteht.

6. Vorrichtung nach einem der vorhergehenden Ansprüche, dadurch gekennzeichnet, daß die Halteschiene aus Recyclingpapier mit aufgeklebten Recyclingpapierwürfeln an den Enden besteht.

7. Halteschiene nach einem der Ansprüche 1 bis 4, dadurch gekennzeichnet, daß sie längsverlaufende Sicken aufweist.

8. Vorrichtung nach einem der vorhergehenden Ansprüche, dadurch gekennzeichnet, daß der Winkel, den die endseitigen Schenkel mit der etwa 30 cm langen Schiene bilden, zwischen 60 und 90° beträgt.

## Claims

1. Device for holding storage files, especially presentation files, in presentation position, having a basic body and bent-up holding legs, characterized in that this basic body comprises a flat holding rail (10) whose ends bear upwardly bent or folded-over legs (12).

2. Device according to Claim 1, the holding rail being configured as a clamp fastening of a storage file.

3. Device according to Claim 1, characterized by perforations in the holding rail for affixing the latter in files of very varied fastening hole divisions.

4. Device according to one of the preceding claims, characterized in that additional, upright pairs of elements are provided parallel to and at a distance inwards from the legs (12).

5. Device according to one of the preceding claims, characterized in that the holding rail consists of galvanized St 37 steel.

6. Device according to one of the preceding claims, characterized in that the holding rail consists of recycled paper, having stuck-on recycled paper cubes at the ends.

7. Holding rail according to one of Claims 1 to 4, characterized in that it exhibits longitudinally running beads.

8. Device according to one of the preceding claims, characterized in that the angle which the end legs form with the approximately 30 cm long rail is between 60 and 90°.

## Revendications

1. Dispositif de maintien de classeurs, notamment de classeurs de présentation, en position d'exposition, le dispositif comprenant un corps de base et des branches cambrées de blocage, caractérisé en ce que ce corps de base consiste en un rail plat de maintien (10), dont les extrémités portent des branches (12) repliées ou cintrées vers le haut.

2. Dispositif selon la revendication 1, dans lequel le rail de maintien est réalisé en tant que fermeture à serrage d'un classeur.

3. Dispositif selon la revendication 1, caractérisé par des perforations du rail de maintien pour le rangement de celui-ci dans des classeurs ayant des écartements très divers entre les trous de fixation.

4. Dispositif selon l'une des revendications précédentes, caractérisé en ce qu'il est prévu des paires supplémentaires d'éléments hauts, situés parallèlement aux branches (12) et avec un écartement vers l'intérieur par rapport à celles-ci.

5. Dispositif selon l'une des revendications précédentes, caractérisé en ce que le rail de maintien consiste en de l'acier St 37 galvanisé à chaud.

6. Dispositif selon l'une des revendications précédentes, caractérisé en ce que le rail de maintien consiste en du papier de recyclage avec des cubes en papier de recyclage collés à ses extrémités.

7. Rail de maintien selon l'une des revendications 1 à 4, caractérisé en ce qu'il présente des moulures longitudinales.

8. Dispositif selon l'une des revendications précédentes, caractérisé en ce que l'angle, que forment les branches d'extrémité par rapport au rail d'environ 30 cm de longueur, est compris entre 60 et 90°.
